# EUROPEAN PATENT SPECIFICATION

(11) **EP 3 196 070 B1**
(45) Date of publication and mention of the grant of the patent: **20.06.2018**
(21) Application number: 15859044.8
(22) Date of filing: 20.04.2015
(51) Int. Cl.: B60P 7/13

(54) **DEVICE FOR IMMOBILISING CONTAINERS IN TRAILERS AND SEMI-TRAILERS**
VORRICHTUNG ZUR IMMOBILISIERUNG VON BEHÄLTERN IN ANHÄNGERN UND SATTELANHÄNGERN
DISPOSITIF PERMETTANT D'IMMOBILISER DES CONTENEURS SUR DES REMORQUES ET DES SEMI-REMORQUES

(30) Priority: 13.11.2014 ES 201431465 U
(43) Date of publication of application: 26.07.2017
(73) Proprietor: Guillén Desarrollos Industriales S.L.U., 46230 Alginet Valencia (ES)
(72) Inventor: GUILLÉN GARULO, José Luis, E-46230 Alginet (Valencia) (ES)
(74) Representative: Isern Patentes y Marcas S.L.
(86) International application number: PCT/ES2015/070312
(87) International publication number: WO 2016/075345

(56) References cited:
- EP-A2- 1 232 905
- CA-A1- 2 365 983
- GB-A- 2 299 129
- GB-A- 2 386 101
- US-A- 1 966 492
- US-A- 4 163 425

## Description

### OBJECT OF THE INVENTION

As expressed in the title of this specification, the present invention relates to a device for immobilizing containers in trailers and semi-trailers that is provided for installation in the frontal portion of the chassis of a trailer or semi-trailer for transporting loading containers and is made up of a swivel head that serves as a support for a retractable pin-lock, whose function is to ensure the hooking and locking of a loading container by inserting the retractable pin into a front hole that is incorporated for that purpose into the corner castings of the loading containers that have been standardized for international and intermodal transport.

Therefore, the invention refers to this type of hook, the pin-lock, the principal characteristic of which is to carry out the function of securing, locking, fastening or anchoring the container on the chassis of the transportation trailer or semi-trailer through the front hole that is incorporated for that purpose into the corner castings located in each of the corners of the standardized loading containers, and particularly of the front corner castings of the container, the front portion of the container being understood as the portion situated in the frontal region of the trailer or semi-trailer upon which the container is loaded in the direction of travel.

A device according to the preamble of claim 1 is disclosed in EP 1 232 905 A1.

### BACKGROUND OF THE INVENTION

In the sector of highway transportation technology for standardized loading containers, there are, depending on the corner castings used in the manufacturing of these standardized containers according to the international standard ISO 1496, and its subsequent revisions, several types of hooking, locking or anchoring mechanisms for securing the containers on the trailers or semi-trailers; one of these types is known internationally as a "pin-lock".

The operations of this type of locking via pin are very simple; in this way the pin-lock is inserted into or removed from the housing with standardized dimensions that the corner castings of the containers have for fastening or detaching the container from the chassis of the trailer or semi-trailer upon which it is being transported.

This type of locking via pin is usually incorporated in the reinforcing ties or heads of the structures that make up the chassis of the semi-trailers and trailers intended for transporting containers and is usually associated with containers that have in their lower portion a housing with standardized dimensions that allows it to be coupled to the chassis on which it will be transported through the effects of a characteristic shape that the chassis of some trailers or semi-trailers have that is called "gooseneck," a term used internationally, the purpose of which is the coupling with the gooseneck tunnel of the container, allowing at the same time for a construction with less total height of the semi-trailer container assembly.

This type of coupling requires locking the frontal face of the container given that it reduces the available space underneath the container in the vicinity of the gooseneck of the chassis and in these cases the pin-lock is used.

There are many elements, systems and devices intended for installation in trailers and semi-trailers for transporting containers whose purpose is to actuate this type of locking mechanism, such as those described in the patents with publication numbers US 6050762A and US 5575599A, which describe several systems to actuate the pin-lock mechanism. Also, the patent with the publication number ES 2186502 and utility model with publication number ES 1014923 describe other devices to lock containers in trailers and semi-trailers.

One of the characteristics of the standardized loading containers relates to its standard dimensions, and therefore to the location of the corner castings that vary depending on the length. In this way, while the width of the container is always the same, there are standardized containers with lengths varying from 20 to 45 feet (6.1 to 13.7 m). In the case of trailers and semi-trailers designed for the transportation of standardized containers of various sizes, this forces the placement of several anchoring points in the chassis depending on the size of the container.

When this occurs in the vicinity of the gooseneck chassis, trailer and semi-trailer manufacturers usually find that the anchors provided for the front anchoring of one type of container get in the way of the placement of another type of container, for which reason they tend to use removable heads, extendable goosenecks and other mechanisms whose purpose is to couple the gooseneck tunnel of the containers of different sizes with the gooseneck of the chassis of the trailer or semi-trailer that will transport the containers without interference.

### DESCRIPTION OF THE INVENTION

In order to meet the aims as well as avoid the disadvantages mentioned in the preceding paragraphs, the invention proposes a device for immobilizing containers in trailers and semi-trailers that comprises a swivel head that attaches to each of the two longitudinal beams of the chassis of a trailer or semi-trailer, said swivel head including a pin that fits in a front hole located in a corner casting of a container in a locking position.

The characteristic swivel head incorporates in a first end a first rotation shaft that is articulately coupled to each of the longitudinal beams of the chassis of the trailer, while in a second end opposite to the first end of the swivel head there is a retractable pin.

Said retractable pin is linked to an integral cam and a reinforcing brace that is articulated at one end to the swivel head, while at the other end of said reinforcing brace it has anchoring means to fasten itself to the longitudinal beams of the chassis in the hooking and locking position of the container.

The device of the invention additionally comprises a reaction brace that is articulated to the cam at one end, while at the opposite end of the reaction brace it is articulated to each of the longitudinal beams of the chassis in the vicinity of the articulated connection of the first rotation shaft.

In an open position of the swivel head with which the container is locked, the swivel head is perpendicular to each of the longitudinal beams of the chassis, and at the same time in contact with the corner casting of the container where the front holes are located, in which each of the retractable pins are inserted, while in its closed position, the swivel head is hidden and arranged in a parallel direction to each of the longitudinal beams of the chassis.

The swivel head incorporates a block that limits a folded-out position of the reinforcing brace in which the swivel head is in an open position corresponding with the locking position of the container.

The retractable pin is guided inside of a through hole that is perpendicular to a frontal face of the swivel head that is in contact with the corner casting of the container in the locked position of the container in which said retractable pin protrudes with respect to said frontal face.

The anchoring means for fastening the end of the reinforcing brace to each of the longitudinal beams of the chassis comprise a bolt that is inserted in a hole located in said end of the reinforcing brace.

The swivel head comprises a C-shaped profile that integrates two parallel branches and a cross-member; the first rotation shaft and the second rotation shaft coupling into pairs of holes facing each other located in said parallel branches, while the through hole is located in the cross-member of the swivel head; where said through hole has a size that corresponds to the thickness of said cross-member and a tubular segment joined to the cross-member of the swivel head.

Through the effects of the characteristic structure of the device of the invention, it can be installed in the gooseneck-shaped area of the chassis of the trailer or semi-trailer intended for transporting standardized loading containers, which allows it to be completely hidden inside the chassis structure, in a space determined by the ISO height regulation for gooseneck couplings and by the total width of the head, without its installation getting in the way of coupling containers with different sizes than what it is intended for when in its unlocked position.

The mechanism that incorporates the device of the invention at the same time allows the swivel head to swivel in order to move it to its locked position and to automatically actuate the retractable pin-lock of the container that will be transported when in its locked position. In this way, for example, it can be used for locking 40 foot (12.2 m) containers and be hidden for the transportation of 45 foot (13.7 m) containers, without the trailer or semi-trailer operator needing to do anything besides inserting or removing the swivel head from its housing.

The reaction brace and the cam allow the folding-out movement of the swivel head to transmit a linear movement to the retractable pin and a rotating movement to the reinforcing brace, in such a way that the retractable pin slides through its guiding through hole and the reinforcing brace is put in its fastening position without needing any additional maneuvers.

Thus, the reinforcing brace necessary for the head to support the stress that the container can transmit in the direction of travel, is positioned in its ending location upon making the swivel head rotate from its closed resting position in the interior of the chassis of the trailer or semi-trailer to its final open locking position in front of the container that is to be transported, the position predetermined by the block that limits the motion of the swivel head when it has already reached perpendicularity with respect to the chassis in which it is mounted, allowing therefore for the fastening of the reinforcing brace and with it the locking of the entire mechanism, including the retractable pin-lock of the container, which moves together with the reinforcing brace and the swivel head.

In this situation, the retractable pin moves with a linear motion, in such a way that it is hidden inside the swivel head when the latter is in its closed resting position inside the chassis and it moves perpendicularly towards the frontal face of the swivel head, as the swivel head folds out towards its open locking position in front of the container that it must fasten.

When the swivel head folds in towards the interior of the chassis, the retractable pin and the reinforcing brace are hidden in the space inside the swivel head in one single motion, releasing the transported container and leaving the gooseneck space of the chassis free of obstacles.

For the purpose of helping to make this specification more readily understandable, a set of drawings constituting an integral part of the same has been included below, wherein by way of illustration and not limitation the object of the invention has been represented.

### BRIEF DESCRIPTION OF THE DRAWINGS

**Figure 1****.-** Shows a perspective view of a trailer chassis upon which a device for immobilizing containers in trailers and semi-trailers, object of the invention, is coupled.
**Figure 2****.-** Shows a perspective view of a portion of the assembly of the container and trailer or semi-trailer chassis where the anchoring of said container to the chassis via a pair of devices of the invention is highlighted.
**Figure 3****.-** Shows a perspective view of the device of the invention.

### DESCRIPTION OF AN EXEMPLARY EMBODIMENT OF THE INVENTION

Considering the numbering adopted in the figures, the device for immobilizing containers in trailers and semi-trailers comprises a swivel head (1) with a C-shaped profile that serves as housing and support for the rest of the components.

The dimensions of said swivel head (1) are determined by the specified height in the standard ISO 1496 for gooseneck couplings between containers (9) and trailers or semi-trailers, by the length resulting from the difference between the position of the anchoring corner castings of a standardized container (9) and the width of the coupling specified in the standard ISO 1496, and by the width required for the motion mechanism.

The swivel head (1) has a first rotation shaft (2) located in a first end of said swivel head (1) in order to articulately couple to a gooseneck chassis (10) of a trailer or semi-trailer for the transportation of standardized containers (9) and that allows the swivel head (1) to fold out with a rotating motion relative to the chassis (10) upon which it is mounted, from a closed resting position parallel to said chassis (10) upon which it is mounted until it reaches an open locking position of the container (9) perpendicular to the chassis (10) upon which it is mounted, for which it completes a 90 degree turn of the swivel head (1) assembly.

The swivel head (1) also has a second rotation shaft (8) upon which a reinforcing brace (3) integral to the swivel head (1) completes its rotation through the effects of a reaction brace (7) that acts on an integral cam (6) integral to the reinforcing brace (3).

The function of the reinforcing brace (3) is to support the stress that the container (9) fastened by the swivel head (1) can transmit during its transportation and to lock the mechanism for moving the swivel head (1) via the fastening or locking of the free end of the reinforcing brace (3) to the chassis (10) that serves as its support, in a position predefined by a block (5) included in the swivel head (1) that limits the motion of the assembly of the device of the invention in the hooking and locking position of the container (9). The reinforcing brace (3) fastens itself to the chassis (10) via a bolt (11) that passes through a hole (12) located in a free end of the reinforcing brace (3) opposite the connecting end that connects said reinforcing brace (3) to the second rotation shaft (8).

The device of the invention also includes the reaction brace (7) that runs underneath the reinforcing brace (3), in such a way that at one of its ends the reaction brace (7) is articulated to the chassis (10) upon which the assembly of the device of the invention is mounted and on the other end said reaction brace (7) is articulated to the cam (6) integral to the reinforcing brace (3).

Said cam (6) transmits in turn the rotation motion of the reinforcing brace (3) to a retractable pin (4) responsible for locking the loading container in its position via its introduction in front holes (13) that for this purpose are incorporated in the anchoring corner castings of standardized loading containers (9). To do so, an end segment of the cam (6) links to the retractable pin (4) that is guided into a through hole (14) located in a second end of the swivel head (1) opposite from the first end where the first rotation shaft (2) is found.

When the swivel head (1) reaches its locking position, a frontal face of the container (9) is made to face a frontal face of the swivel head (1) that has the respective through hole (14) through which it moves and guides the retractable pin (4) in order to lock and immobilize the container (9) in a linear motion induced by the cam (6), in such a way that the retractable pin (4) is completely extended when the swivel head (1) reaches the open locking position of the container (9) and completely hidden in the through hole (14) of the swivel head (1) when it reaches its closed resting position inside the chassis (10) that houses it.

In summary, the swivel head (1) is articulately coupled to the chassis (10) via the first articulation shaft (2), one end of the reinforcing brace (3) articulately coupling with the swivel head (1), with the other end fastened to the chassis (10) in the active locking position of the device of the invention in which the container (9) is immobilized to the chassis (10). In turn, the reinforcing brace (3) integrates the cam (6) where it is articulated to one end of the reaction brace (7), whose free end is articulated to the chassis (10) in the vicinity of the articulated connection of the first rotation shaft (2). Lastly, the cam (6) has an extension that connects with the retractable pin (4).

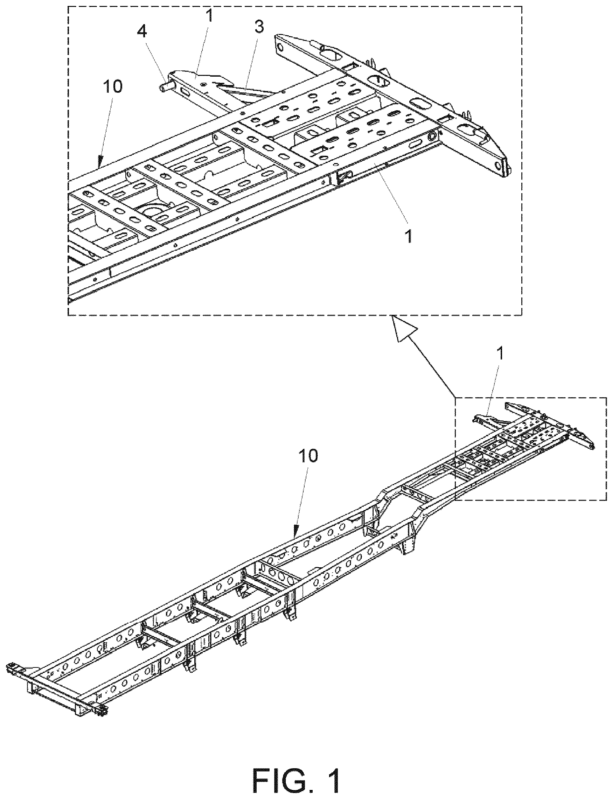

The device of the invention is hidden in its closed position inside of an exterior conduit of each of the longitudinal beams in a double-T shape that makes up part of the chassis (10) of the trailer or semitrailer, as seen in figure 1.

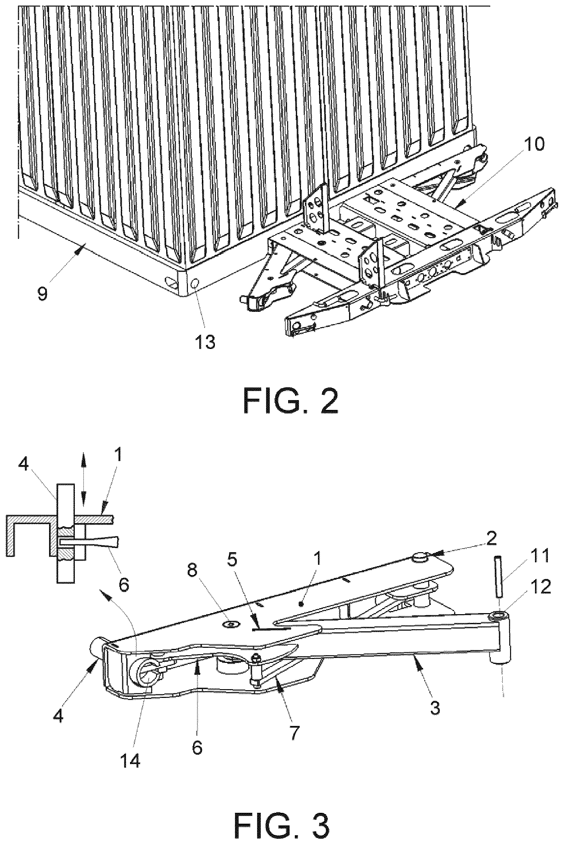

In contrast, in the open and active position of the device of the invention, the swivel head (1) is arranged perpendicularly to the direction of the longitudinal beams of the chassis (10) as seen in figures 1 and 2.

With this arrangement described, when the swivel head (1) folds out from the closed position to the open locked position, the retractable pin (4) moves out due to the effects of the motion of the swivel head (1) that mobilizes the reaction brace (7) and cam (6), which during its motion pulls the retractable pin (4) along.

When the swivel head (1) folds in from the open locked position to the closed position, the motions are the same as those described in the previous paragraph, but in the opposite direction.

## Claims

1. A DEVICE FOR IMMOBILIZING CONTAINERS IN TRAILERS AND SEMI-TRAILERS, including a structure that attaches to each of the two longitudinal beams of the chassis of a trailer or semi-trailer, and said structure including a pin that fits in a front hole located in a corner casting of a container in a locking position, whereby the device comprises a swivel head (1) that incorporates, on a first end, a first rotation shaft (2) that is articulately coupled to each of the longitudinal beams of the chassis (10) of the trailer or semi-trailer, while in a second end opposite to the first end of the swivel head (1) there is a retractable pin (4); **characterized in that**
- said retractable pin (4) is linked to an integral cam (6) and to a reinforcing brace (3) that is articulated at one end to the swivel head (1), while at the other end of said reinforcing brace (3) it has anchoring means to fasten itself to the longitudinal beams of the chassis (10) in the hooking and locking position of the container (9);
- it further comprises a reaction brace (7) that is articulated to the cam (6) at one end, while at the opposite end of the reaction brace (7) it is articulated to each of the longitudinal beams of the chassis (10) in the vicinity of the articulated connection of the first rotation shaft (2);
wherein, in an open position of the swivel head (1) in which the container (9) is locked, the swivel head (1) is perpendicular to each of the longitudinal beams of the chassis (10), and at the same time in contact with the corner casting of the container (9) where the front holes (13) are located, in which each of the retractable pins (4) are inserted; and wherein in its closed position, the swivel head (1) is hidden and arranged in a parallel direction to each of the longitudinal beams of the chassis (10).

2. THE DEVICE FOR IMMOBILIZING CONTAINERS IN TRAILERS AND SEMI-TRAILERS, according to claim 1, **characterized in that** the swivel head (1) incorporates a block (5) that limits a folded-out position of the reinforcing brace (3) in which the swivel head (1) is in an open position corresponding with the locking position of the container (9).

3. THE DEVICE FOR IMMOBILIZING CONTAINERS IN TRAILERS AND SEMI-TRAILERS, according to any one of the preceding claims, **characterized in that** the retractable pin (4) is guided inside of a through hole (14) that is perpendicular to a frontal face of the swivel head (1) that is in contact with the corner casting of the container (9) in the locked position of the container (9) in which said retractable pin (4) protrudes with respect to said frontal face.

4. DEVICE FOR IMMOBILIZING CONTAINERS IN TRAILERS AND SEMI-TRAILERS, according to any one of the preceding claims, **characterized in that** the anchoring means for fastening the end of the reinforcing brace (3) to each of the longitudinal beams of the chassis (10) comprise a bolt (11) that is inserted in a hole (12) located in said end of the reinforcing brace (3).

5. THE DEVICE FOR IMMOBILIZING CONTAINERS IN TRAILERS AND SEMI-TRAILERS, according to any one of the preceding claims, **characterized in that** the swivel head (1) comprises a C-shaped profile that integrates two parallel branches and a cross-member; the first rotation shaft (2) and the second rotation shaft (8) coupling into pairs of holes facing each other located in said parallel branches, while the through hole (14) is located in the cross-member of the swivel head (1); where said through hole has a length that corresponds to the thickness of said cross-member and a tubular segment joined to the cross-member of the swivel head (1).

## Patentansprüche

1. VORRICHTUNG ZUR IMMOBILISIERUNG VON BEHÄLTERN IN ANHÄNGERN UND SATTELANHÄNGERN, einschließlich einer Struktur, die an den beiden Längsträgern des Chassis des Anhängers oder Sattelanhängers angebracht ist, wobei die Struktur einen Stift einschließt, der in ein vorderes Loch passt, das sich in einem Eckbeschlag eines Behälters in einer Verriegelungsstellung befindet, wobei die Vorrichtung
einen Schwenkkopf (1) umfasst, der an einem ersten Ende eine erste Drehwelle (2) aufnimmt, die gelenkig mit jedem der Längsträger des Chassis (10) des Anhängers oder Sattelanhängers gekoppelt ist, während an einem zweiten Ende, das dem ersten Ende des Schwenkkopfes (1) gegenüberliegt, ein zurückziehbarer Stift (4) ist; **dadurch gekennzeichnet, dass**
- der zurückziehbare Stift (4) mit einer integrierten Nocke (6) und einer Verstärkungsstrebe (3) verbunden ist, die an einem Ende mit dem Schwenkkopf (1) gelenkig verbunden ist, während sie an dem anderen Ende der Verstärkungsstrebe (3) Verankerungsmittel hat, um sich an den Längsträgern des Chassis (10) in der Verhakungs- und Verriegelungsstellung des Behälters (9) zu befestigen;
- sie ferner eine Reaktionsstrebe (7) umfasst, die mit der Nocke (6) an einem Ende gelenkig verbunden ist, während an dem gegenüberliegenden Ende die Reaktionsstrebe (7) mit jedem der Längsträger des Chassis (10) in der Nähe der Gelenkverbindung der ersten Drehwelle (2) gelenkig verbunden ist;
wobei der Schwenkkopf (1) in einer offenen Stellung des Schwenkkopfs (1), in der der Behälter (9) verschlossen ist, senkrecht zu jedem der Längsträger des Chassis (10) ist und gleichzeitig mit dem Eckbeschlag eines Behälters (9) in Kontakt steht, wo sich die vorderen Löcher (13) befinden, in denen jeder der zurückziehbaren Stifte (4) eingeführt ist, und wobei in seiner geschlossenen Stellung der Schwenkkopf (1) verdeckt ist und parallel in Richtung jedes der Längsträger des Chassis (10) angeordnet ist.

2. VORRICHTUNG ZUR IMMOBILISIERUNG VON BEHÄLTERN IN ANHÄNGERN UND SCHWENKANHÄNGERN nach Anspruch 1, **dadurch gekennzeichnet**, das der Schwenkkopf (1) einen Anschlag (5) aufnimmt, der eine aufgeklappte Stellung der Verstärkungsstrebe (3) einschränkt, in der der Schwenkkopf (1) in einer offenen Stellung entsprechend der Verschlussstellung des Behälters (9) ist.

3. VORRICHTUNG ZUR IMMOBILISIERUNG VON BEHÄLTERN IN ANHÄNGERN UND SATTELANHÄNGERN nach einem der vorangehenden Ansprüche, **dadurch gekennzeichnet, dass** der zurückziehbare Stift (4) innerhalb eines Durchgangslochs (14) geführt wird, das senkrecht zu einer Vorderseite des Schwenkkopfes (1) ist, der in Kontakt mit dem Eckbeschlag eines Behälters (9) in der Verriegelungsstellung des Behälters (9) steht, in dem der zurückziehbare Stift (4) bezüglich der Vorderseite hervorsteht.

4. VORRICHTUNG ZUR IMMOBILISIERUNG VON BEHÄLTERN UND SATTELANHÄNGERN nach einem der vorangehenden Ansprüche, **dadurch gekennzeichnet, dass** die Verankerungsmittel zum Befestigen des Endes der Verstärkungsstrebe (3) an jedem der Längsträger des Chassis (10) einen Bolzen (11) umfassen, der in ein Loch (12) eingefügt ist, das sich in dem Ende der Verstärkungsstrebe (3) befindet.

5. VORRICHTUNG ZUR IMMOBILISIERUNG VON BEHÄLTERN IN ANHÄNGERN UND SATTELANHÄNGERN nach einem der vorangehenden Ansprüche, **dadurch gekennzeichnet, dass** der Schwenkkopf (1) ein C-förmiges Profil umfasst, das zwei parallele Zweige und einen Querträger integriert; wobei die erste Drehwelle (2) und die zweite Drehwelle (8) in Öffnungspaare gekoppelt sind, die einander an den parallelen Zweigen zugewandt sind, während das Durchgangsloch (14) sich in dem Querträger des Schwenkkopfes (1) befindet; wobei das Durchgangsloch eine Länge hat, die der Dicke des Querträgers und eines röhrenförmigen Segments, das mit dem Querträger des Schwenkkopfes (1) verbunden ist, entspricht.

## Revendications

1. DISPOSITIF POUR IMMOBILISER LES CONTENEURS DANS LES REMORQUES ET LES SEMI-REMORQUES, comportant une structure qui est raccordée à chacune des deux poutrelles longitudinales du châssis d'une remorque ou semi-remorque, et ladite structure comportant une goupille qui est insérée dans un orifice frontale situé dans un coin de fixation d'un conteneur dans une position de verrouillage, dans lequel le dispositif comprend une tête pivotante (1) qui incorpore, à une première extrémité, un premier arbre de rotation (2) qui est couplé de façon articulée à chacune des poutrelles longitudinales du châssis (10) de la remorque ou semi-remorque, alors qu'à une deuxième extrémité opposée à la première extrémité de la tête pivotante (1) il y a une goupille rétractable (4) ;
**caractérisé en ce que**
- ladite goupille rétractable (4) est reliée à une came intégrale (6) et à une entretoise de renfort (3) qui est articulée à une extrémité à la tête pivotante (1), alors qu'à l'autre extrémité de ladite entretoise de renforcement (3) elle a des moyens d'ancrage pour être serrée aux poutrelles longitudinales du châssis (10) dans la position d'accrochage et de verrouillage du conteneur (9) ;
- il comprend en outre une entretoise de réaction (7) qui est articulée à la came (6) à une extrémité, alors qu'à l'extrémité opposée de l'entretoise de réaction (7) elle est articulée à chacune des poutrelles longitudinales du châssis (10) dans la proximité du raccordement articulé du premier arbre de rotation (2) ;
dans lequel, dans une position ouverte de la tête pivotante (1) dans laquelle le conteneur (9) est verrouillé, la tête pivotante (1) est perpendiculaire à chacune des poutrelles longitudinales du châssis (10), et en même temps en contact avec le coin de fixation du conteneur (9) où les orifices frontaux (13) sont situés, dans lesquels chacun des axes rétractables (4) sont insérés ; et dans lequel dans sa position fermée, la tête pivotante (1) est cachée et disposée dans un sens parallèle à chacune des poutrelles longitudinales du châssis (10).

2. DISPOSITIF POUR IMMOBILISER LES CONTENEURS DANS LES REMORQUES ET LES SEMI-REMORQUES, selon la revendication 1, **caractérisé en ce que** la tête pivotante (1) incorpore un bloc (5) qui limite une position dépliée de l'entretoise de renforcement (3) dans laquelle la tête pivotante (1) est dans une position ouverte correspondant à la position de verrouillage du conteneur (9).

3. DISPOSITIF POUR IMMOBILISER LES CONTENEURS DANS LES REMORQUES ET LES SEMI-REMORQUES, selon l'une quelconque des revendications précédentes, **caractérisé en ce que** la goupille rétractable (4) est guidée à l'intérieur d'un orifice traversant (14) qui est perpendiculaire à une face frontale de la tête pivotante (1) qui est en contact avec le coin de fixation du conteneur (9) dans la position verrouillée du conteneur (9) dans laquelle ladite goupille rétractable (4) fait saillie par rapport à ladite face frontale.

4. DISPOSITIF POUR IMMOBILISER LES CONTENEURS DANS LES REMORQUES ET LES SEMI-REMORQUES, selon l'une quelconque des revendications précédentes, **caractérisé en ce que** les moyens d'ancrage pour serrer l'extrémité de l'entretoise de renforcement (3) à chacune des poutrelles longitudinales du châssis (10) comprennent un boulon (11) qui est inséré dans un orifice (12) situé dans ladite extrémité de l'entretoise de renforcement (3).

5. DISPOSITIF POUR IMMOBILISER LES CONTENEURS DANS LES REMORQUES ET LES SEMI-REMORQUES, selon l'une quelconque des revendications précédentes, **caractérisé en ce que** la tête pivotante (1) comprend un profilé en forme de C qui intègre deux branches parallèles et un membre transversal ; le premier arbre de rotation (2) et le deuxième arbre de rotation (8) étant couplés dans des paires d'orifices en regard situés dans lesdites branches parallèles, alors que l'orifice traversant (14) est situé dans le membre transversal de la tête pivotante (1) ; où ledit orifice traversant a une longueur qui correspond à l'épaisseur dudit membre transversal et un segment tubulaire lié au membre transversal de la tête pivotante (1).
